# EUROPEAN PATENT APPLICATION

(11) **EP 4 831 322 A1**
(43) Date of publication of application: **28.10.2026**
(21) Application number: 24907710.8
(22) Date of filing: 15.10.2024
(51) Int. Cl.: C22C 30/02, C22C 19/03, C22C 24/00, C22B 7/00, C22B 1/00, H01M 10/54

(54) **RECOVERED MATERIALS FROM WASTE BATTERIES AND METHOD FOR RECOVERING VALUABLE METALS**

(30) Priority: 18.12.2023 KR 20230185164
(71) Applicant: POSCO Holdings Inc., Pohang-si, Gyeongsangbuk-do 37859 (KR)
(72) Inventor: PARK, Chonglyuck, Pohang-si, Gyeongsangbuk-do 37859 (KR); KIM, Wanyi, Pohang-si, Gyeongsangbuk-do 37859 (KR); HAN, Sangwoo, Pohang-si, Gyeongsangbuk-do 37859 (KR); LEE, Juseung, Pohang-si, Gyeongsangbuk-do 37859 (KR); PARK, Junyong, Pohang-si, Gyeongsangbuk-do 37859 (KR)
(74) Representative: Pfenning, Meinig & Partner mbB
(86) International application number: PCT/KR2024/015635
(87) International publication number: WO 2025/135425

(57) **Abstract**

The present invention provides a recovered material recovered from a waste battery, the recovered material including, based on 100 wt% of the recovered material, 20 wt% to 35 wt% of a valuable metal recovery alloy, 25 wt% to 50 wt% of a lithium compound, and a balance of a graphite-based material.

## Description

### [TECHNICAL FIELD]

The present invention relates to a waste battery, and more particularly, to a recovered material recovered from a waste battery as materials such as valuable metals, lithium oxide, graphite, and copper by a method for treating a waste battery, and to a method for recovering valuable metals.

### [BACKGROUND ART]

As demand for electric vehicles has become active worldwide, the issue of treatment of waste batteries generated from the electric vehicles has emerged as a social issue. In the case of lithium secondary batteries, which are main raw materials of the waste batteries, organic solvents, explosive materials, and heavy metal materials such as Ni, Co, Mn, and Fe are contained therein. However, since Ni, Co, Mn, and Li have high scarcity value as valuable metals, recovery and recycling processes after disposal of lithium secondary batteries are emerging as an important research field.

Specifically, a lithium secondary battery mainly includes copper and aluminum used as current collectors, Li-, Ni-, Co-, and Mn-containing oxides constituting a positive electrode material, and graphite used as a negative electrode material, and includes a separator separating the positive electrode material and the negative electrode material and an electrolyte solution injected into the separator. A solvent and a salt constituting the electrolyte solution are mainly used by mixing carbonate organic materials such as ethylene carbonate and propylene carbonate, and, for example, LiPF₆ is used.

As described above, a lithium secondary battery is composed of heavy metal materials such as Ni-Co-Mn-Fe, carbon, and other electrolyte materials, and among these, Ni, Co, Mn, and Li are valuable as valuable metals.

Recycling for recovery as battery raw materials may generally recover valuable metals through disassembly, discharge, shredding, heat treatment, recovery, and a wet process of a battery. In the case of discharge, brine discharge is performed, and at this time, materials such as Na, K, Mg, Ca, and Cl introduced therein are included as impurities in the recovered raw material.

After heat treatment, products formed from the recovered material vary depending on a heat treatment temperature. When heat treatment is performed at a temperature of 600°C or less, the recovered material is called black powder, and is in a powder form in which oxides of Ni-Co-Mn-Li and carbon of a negative electrode material are mixed, and Al and Cu may be included in extremely small amounts because they are removed in advance.

When the black powder is heat-treated at a high temperature of 1,000°C or higher, metal oxides are reduced by the carbon of the negative electrode material and alloyed, and a black alloy containing such alloy components, carbon, and other materials is obtained. Accordingly, there is a need for research to increase a recovery rate of valuable metals by recovering materials such as valuable metals, lithium oxide, and graphite from the black alloy by material.

### [SUMMARY OF THE INVENTION]

### [Technical Problem]

A recovered material recovered from a waste battery according to one embodiment of the present invention may be a recovered material that facilitates recycling of a battery in a downstream process by efficiently recovering materials such as valuable metals, lithium oxide, and graphite from a black alloy obtained from black powder by material, thereby increasing recovery rates of valuable metals and graphite.

A method for recovering valuable metals according to another embodiment of the present invention is to provide a recovery method that facilitates battery recycling in a downstream process by increasing a recovery rate of valuable metals from a black alloy obtained from black powder.

### [Technical Solution]

A recovered material recovered from a waste battery according to one embodiment of the present invention is a material recovered from a waste battery and may include, based on 100 wt% of the recovered material, 20 wt% to 35 wt% of a valuable metal recovery alloy, 25 wt% to 50 wt% of a lithium compound, and a balance of a graphite-based material. In one embodiment, the valuable metal recovery alloy may include Ni, Co, Mn, and impurities.

In one embodiment, the valuable metal recovery alloy may include, based on 100 wt% of the entire valuable metal recovery alloy, 90 wt% or more of a total amount of Ni, Co, and Mn, and a balance of impurities. In one embodiment, the valuable metal recovery alloy may include copper (Cu): 1 wt% to 7 wt% based on 100 wt% of the entire valuable metal recovery alloy.

In one embodiment, the valuable metal recovery alloy may include, based on 100 wt% of the entire valuable metal recovery alloy, nickel (Ni): 50 wt% to 60 wt%, cobalt (Co): 18 wt% to 28 wt%, manganese (Mn): 10 wt% to 20 wt%, and a balance of impurities. In one embodiment, the lithium compound may include, based on 100 wt% of the lithium compound, lithium (Li): 10 wt% to 20 wt%, aluminum (Al): 20 wt% to 30 wt%, and a balance of impurities.

In one embodiment, the lithium compound may include lithium oxide. In one embodiment, the lithium oxide may include lithium aluminum oxide. In one embodiment, the graphite-based material may include carbon (C): 80 wt% to 90 wt%, and a balance of impurities.

In one embodiment, the graphite-based material may include copper (Cu): 13 wt% to 25 wt%. In one embodiment, the valuable metal recovery alloy, the lithium compound, and the graphite-based material may each be in a powder form.

In one embodiment, at least a portion of the lithium compound may include a composition disposed on at least a portion of a surface of the valuable metal recovery alloy. In one embodiment, the composition may have a core-shell structure.

A method for recovering valuable metals according to another embodiment of the present invention relates to a method for recovering valuable metals from a product obtained by reduction heat-treating a shredded material recovered from a waste battery at a high temperature, the method including magnetically separating the heat-treated product into a first magnetic material and a first non-magnetic material, and pulverizing the first magnetic material, wherein the pulverizing may be performed in a shear force range of 1 m/sec to 5 m/sec based on tip speed.

In one embodiment, the pulverizing may be performed for 30 minutes to 60 minutes.

In one embodiment, at least a portion of the product obtained by reduction heat-treating the shredded material recovered from the waste battery at a high temperature may include a valuable metal recovery composition including a core portion including a valuable metal recovery alloy and a shell portion disposed on the core portion and including a lithium compound.

### [Advantageous Effects]

The recovered material recovered from a waste battery according to one embodiment of the present invention includes a valuable metal recovery alloy, a lithium compound, and a graphite-based material, whereby materials such as valuable metals, lithium oxide, and graphite can be efficiently recovered from a black alloy obtained from black powder by material, recovery rates of valuable metals and graphite can be increased, and a recovered material recyclable as a positive electrode material and a negative electrode material in a downstream process can be obtained.

### [BRIEF DESCRIPTION OF THE DRAWINGS]

FIGS. 1A to 1C are photographs of a valuable metal recovery alloy, a lithium compound, and a graphite-based material of a recovered material recovered from a waste battery according to one embodiment of the present invention.
FIG. 2 is a flowchart of a battery treatment method according to one embodiment of the present invention.
FIGS. 3A and 3B show XRD analysis results of a composition for recovering valuable metals formed after heat treatment according to one embodiment of the present invention.
FIG. 4 is an SEM photograph of the composition for recovering valuable metals.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

In addition, unless otherwise specifically stated, % in the present specification means wt%.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail. However, these are provided as examples, and the present invention is not limited thereto, and the present invention is only defined by the scope of the claims to be described below.

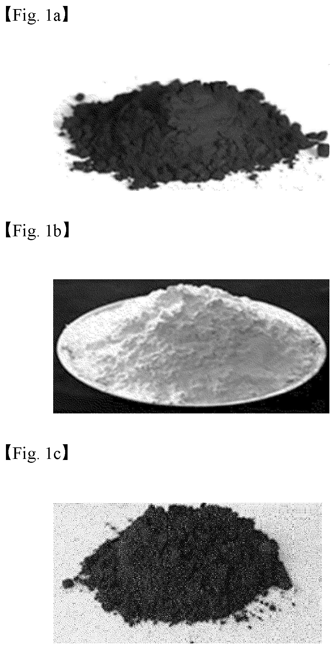

FIGS. 1A to 1C are photographs of a valuable metal recovery alloy, a lithium compound, and a graphite-based material of a recovered material recovered from a waste battery according to one embodiment of the present invention.

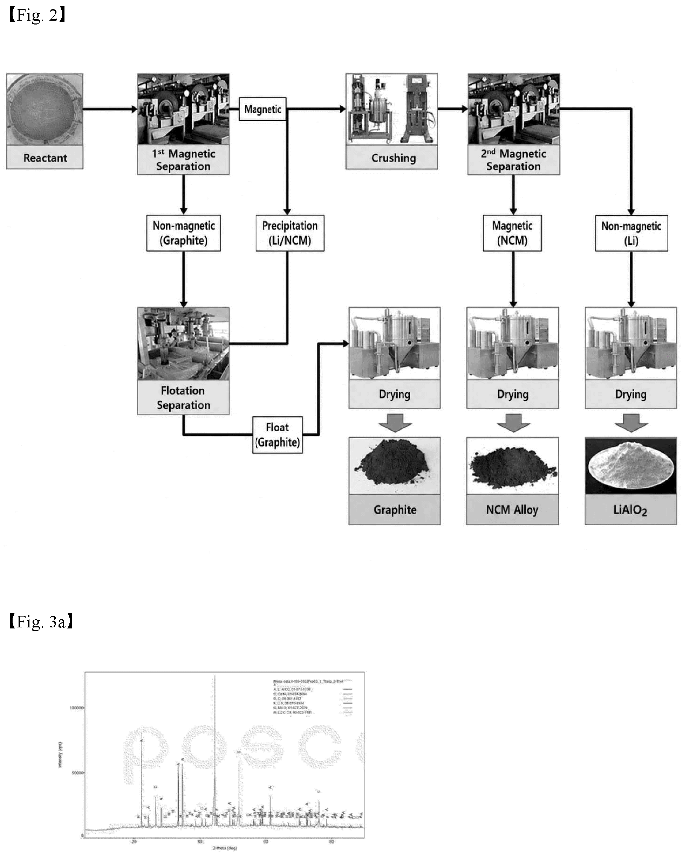

Referring to FIGS. 1A to 1C, the recovered material recovered from a waste battery according to one embodiment of the present invention includes, based on 100 wt% of the recovered material, 20 wt% to 35 wt% of a valuable metal recovery alloy, 25 wt% to 50 wt% of a lithium compound, and a balance of a graphite-based material. The recovered material recovered from the waste battery may be a recovered material recovered by the battery treatment method described below with reference to FIG. 2. Specifically, the recovered material may be a valuable metal recovery alloy including valuable metals, a lithium compound including lithium, and a balance of a graphite-based material.

In one embodiment, the recovered material may include, based on 100 wt% of the recovered material, 20 wt% to 35 wt% of the valuable metal recovery alloy, 25 wt% to 50 wt% of the lithium compound, and a balance of the graphite-based material. From the battery treatment method described below, the valuable metal recovery alloy including valuable metals, the lithium compound including lithium, and the graphite-based material including carbon may be recovered in powder form.

In one embodiment, the valuable metal recovery alloy may be 20 wt% to 35 wt% based on 100 wt% of the recovered material. Specifically, the valuable metal recovery alloy may be 25 wt% to 30 wt%. The valuable metal recovery alloy may be a material including valuable metals such as Ni, Co, and Mn.

As the weight percentage of the valuable metal recovery alloy in the recovered material satisfies the above-described range, there is an advantage in that the recovery rate of valuable metals such as Ni, Co, and Mn can be increased. When the weight percentage is outside the upper limit of the above-described range, the valuable metal recovery rate can be increased, but there is an uneconomical problem. When the weight percentage is outside the lower limit of the above-described range, there is a problem in that the valuable metal recovery rate decreases.

In one embodiment, the valuable metal recovery alloy may include, based on 100 wt% of the entire valuable metal recovery alloy, 90 wt% or more of a total amount of Ni, Co, and Mn, and a balance of impurities. Specifically, the total amount of Ni, Co, and Mn may include 90 wt% to 96 wt%, and more specifically 92 wt% to 95 wt%.

When the total amount of Ni, Co, and Mn in the valuable metal recovery alloy satisfies the above-described range, a recovery rate of valuable metals can be increased. When the total amount of Ni, Co, and Mn in the valuable metal recovery alloy is outside the above-described range, there is a problem in that economic feasibility is absent or a recovery rate of valuable metals is low.

In one embodiment, nickel (Ni) may be included in an amount of 50 wt% to 60 wt% based on 100 wt% of the entire valuable metal recovery alloy. Specifically, nickel may be included in an amount of 52 wt% to 58 wt%.

When the content of nickel is outside the upper limit of the above-described range, there is a problem of reduced leaching rate due to generation of nickel carbide (Ni₃C). When the content of nickel is outside the lower limit of the above-described range, there is a problem of reduced Ni recovery rate in leaching and solvent extraction.

In one embodiment, cobalt (Co) may be included in an amount of 18 wt% to 28 wt% based on 100 wt% of the entire valuable metal recovery alloy. Specifically, cobalt may be included in an amount of 20 wt% to 26 wt%.

When the content of cobalt is outside the upper limit of the above-described range, there is a problem in that a leaching rate is reduced due to generation of cobalt carbide. When the content of cobalt is outside the lower limit of the above-described range, there is a problem in that a Co recovery rate in leaching and solvent extraction is reduced.

In one embodiment, manganese (Mn) may be included in an amount of 10 wt% to 20 wt% based on 100 wt% of the entire valuable metal recovery alloy. Specifically, cobalt may be included in an amount of 12 wt% to 18 wt%.

When the content of manganese is outside the upper limit of the above-described range, there is a problem in that a leaching rate is reduced due to generation of manganese carbide. When the content of manganese is outside the lower limit of the above-described range, there is a problem in that a Mn recovery rate in leaching and solvent extraction is reduced.

In one embodiment, lithium (Li) may be included in an amount of 0.01 wt% to 5 wt% based on 100 wt% of the entire valuable metal recovery alloy. Specifically, the lithium may be included in an amount of 0.05 wt% to 0.15 wt%.

As the lithium satisfies the above range, there is an advantage in that Li recovery rate can be maximized during a Li refining process. When the lithium is outside the upper limit of the above range, there is a problem of reduced Ni and Co recovery rates, and when the lithium is outside the lower limit of the above range, there is a problem in that Li recovery rate decreases during the Li refining process and process costs increase.

In one embodiment, the valuable metal recovery alloy may include copper (Cu) in an amount of 1.0 wt% to 7 wt%. Specifically, the copper may be included in an amount of 3 wt% to 5 wt%.

When the content of copper is outside the upper limit of the above range, there is a problem of process costs due to an increase in CuSO₄ precipitation amount in leaching and solvent extraction. When the content of copper is outside the lower limit of the above range, there is a problem in that a low-melting-point Ni-Co-Mn product is difficult to generate and an amount of unreacted materials increases. In one embodiment, the copper may bind with nickel (Ni) among the valuable metals to form an alloy.

In one embodiment, the valuable metal recovery alloy may include carbon (C) in an amount of 0.1 wt% to 10 wt%. As the carbon satisfies the above range, actual yield can be increased, and treatment time in a wet process can be reduced. Specifically, the carbon may be included in an amount of 1 wt% to 7 wt%.

When the carbon is outside the upper limit of the above range, the negative electrode material remains in an unreacted state, alloying is not suitably performed, and the valuable metal remains in the positive electrode material in the form of an oxide. When the carbon is outside the lower limit of the above range, there is a problem in that lithium may be lost due to high temperature.

In one embodiment, the valuable metal recovery alloy may include aluminum (Al) in an amount of 0.25 wt% to 30 wt%. When the content of aluminum is outside the upper limit of the above range, there is a problem of reduced Ni and Co recovery rates during a leaching and solvent extraction process. When the content of aluminum is outside the lower limit of the above range, LiAlO₂ is difficult to generate, and thus there is a problem of reduced Li recovery rate.

In one embodiment, the lithium compound may include 25 wt% to 50 wt% based on 100 wt% of the recovered material. Specifically, the lithium compound may include 30 wt% to 40 wt%. In one embodiment, the lithium compound may be a compound including lithium. For example, the lithium compound may include lithium oxide, and the lithium oxide may include lithium aluminum oxide.

As the lithium compound satisfies the above-described range, a recovery rate of lithium, which is one of valuable metals, can be increased. When the lithium compound is outside the lower limit of the above-described range, it means that a large amount of Li has been lost to the NCM alloy or graphite, which causes a problem of reduced Li recovery rate, and since the Li content of an input raw material decreases when recovering Li in a downstream wet refining process, process costs increase.

In one embodiment, the lithium compound may include lithium (Li) in an amount of 10 wt% to 20 wt% based on 100 wt% of the lithium compound. Specifically, the lithium may be 12 wt% to 18 wt%.

When the content of lithium is outside the upper limit of the above-described range, it means that lithium does not react with Al to form a lithium compound in the form of LiAlO₂ and instead a ratio of lithium hydroxide, lithium fluoride, lithium carbonate, and the like is high, and there is a problem in that methods such as water leaching and acid leaching must be considered in a downstream wet refining process. When the content of lithium is outside the lower limit of the above-described range, most of the lithium compound is recovered in the form of LiAlO₂ having low water solubility, and it means that lithium compounds having high water solubility were dissolved in water during a sorting process, which causes a problem in that lithium must be recovered again from the water used in the sorting process.

In one embodiment, the lithium compound may include aluminum (Al) in an amount of 20 wt% to 30 wt% based on 100 wt% of the lithium compound. Specifically, aluminum may be 23 wt% to 28 wt%. As the content of aluminum satisfies the above-described range, a lithium compound is formed through physical or chemical bonding with lithium, thereby increasing the yield of lithium.

When the content of aluminum is outside the upper limit of the above range, there is a problem of an increase in Ni and Co solvent extraction and crystallization process costs and a reduction in Ni and Co recovery rates due to excessive generation of Al₂(SO₄)₃ in a leaching and solvent extraction process. When the content of aluminum is outside the lower limit of the above range, there is a problem in that generation of Li-Al-O oxide is inferior due to insufficient aluminum content.

In one embodiment, the lithium compound may include carbon (C) in an amount of 1 wt% to 7 wt% based on 100 wt% of the lithium compound. Specifically, the content of carbon (C) may be 3 wt% to 5 wt%. As the content of carbon satisfies the above range, there is an advantage in optimizing wet treatment of the valuable metal recovery composition.

When the content of carbon is outside the upper limit of the above range, there is a problem of reduced leaching rate due to generation of nickel carbide (Ni₃C). When the content of carbon is outside the lower limit of the above range, the contents of other impurities such as Si increase, and thus there is a problem of a reduced recovery rate of valuable metals such as Ni and Co in solvent extraction after a leaching process.

In one embodiment, the graphite-based material may include 25 wt% to 50 wt% based on 100 wt% of the recovered material. Specifically, the graphite-based material may include 30 wt% to 40 wt%. The content of the graphite-based material may be such that a large amount of the graphite-based material is generated as a high-temperature reduction reaction is performed in a low oxygen content range in which generation of carbon dioxide is reduced. As the graphite-based material satisfies the above-described range, a recycling yield of the graphite-based material usable as a negative electrode material can be increased.

When the graphite-based material is outside the upper limit of the above-described range, the content of graphite becomes excessive, and thus there is a problem in that the recovery rate of valuable metals is reduced. When the graphite-based material is outside the lower limit of the above-described range, there is a problem in that the recovery rate of graphite is low.

In one embodiment, the graphite-based material may include carbon (C) in an amount of 80 wt% to 90 wt%, and a balance of impurities. The content of carbon (C) may be 83 wt% to 87 wt%. As the content of carbon satisfies the above-described range, high-purity graphite including carbon can be obtained.

When the content of carbon is outside the upper limit of the above-described range, there is a problem in that the recovery rate of valuable metals is reduced. When the content of carbon is outside the lower limit of the above-described range, there is a problem in that the recovery rate of graphite is low.

In one embodiment, the graphite-based material may include copper (Cu) in an amount of 13 wt% to 25 wt% based on 100 wt% of the graphite-based material. Specifically, the content of copper may be 15 wt% to 20 wt%. When the content of copper is outside the upper limit of the above-described range, there is a problem in that an amount of acid used increases in removing Cu during a process of refining graphite into high-purity graphite.

FIG. 2 is a flowchart of a battery treatment method according to one embodiment of the present invention.

Referring to FIG. 2, the battery treatment method includes preparing a product obtained by reduction heat-treating a shredded material recovered from a waste battery at a high temperature, magnetically separating the product, and pulverizing a product having magnetism among the magnetically separated products to separate a magnetic material and a non-magnetic material. The battery treatment method of the present invention provides a battery treatment method capable of increasing a recovery rate of valuable metals by efficiently performing magnetic separation from a product produced by high-temperature reduction heat treatment of a shredded material recovered from a waste battery. The valuable metals of the present invention may mean expensive metal components included in a battery and may mean nickel, cobalt, manganese, aluminum, copper, and lithium.

The step of preparing the product obtained by reduction heat-treating the shredded material recovered from the waste battery at a high temperature includes preparing a battery, shredding the battery into battery shredded material, and high-temperature heat-treating the shredded battery material.

In the step of preparing the battery, the battery may be a method for treating various types of batteries including lithium ions, and the battery may be, for example, a lithium secondary battery separated from an automobile, a secondary battery separated from an electronic device such as a mobile phone, a camera, or a laptop computer, specifically a lithium secondary battery. More specifically, the battery uses a waste battery, and thus has an environmentally friendly advantage.

In one embodiment, in the step of preparing the battery, the battery may include lithium (Li) and aluminum (Al). As lithium and aluminum coexist in the battery, after battery treatment, lithium and aluminum may be disposed as a physically and/or chemically bonded material in a generated product.

The step of shredding the battery may mean a process of applying impact or pressure to the battery so that a portion of the battery is separated from the battery. In one embodiment, the step of shredding the battery may mean all of a process of pulverizing the battery, a process of cutting the battery, a process of compressing the battery, and a combination thereof. Specifically, the shredding step may include all processes capable of destroying the battery to obtain shredded pieces having a small size.

In one embodiment, the step of shredding the battery may include all processes of compressing the prepared battery or destroying the battery by applying external force such as shear force or tensile force. The step of shredding the battery may be performed, for example, using a shredder.

In one embodiment, the step of shredding the battery may be performed at least once or more. Specifically, the shredding step may be performed continuously or discontinuously at least once or more.

In one embodiment, the step of shredding the battery may be performed under a condition of supplying an inert gas, carbon dioxide, nitrogen, water, or a combination thereof, or under a vacuum atmosphere condition of 100 torr or less. When the step is performed under the above-described conditions, oxygen supply can be suppressed, whereby an electrolyte can be prevented from reacting with oxygen, explosion caused thereby can be prevented, and vaporization of the electrolyte solution can be suppressed, so that flammable gases such as ethylene, propylene, or hydrogen may not be generated.

The step of high-temperature heat-treating the shredded battery material may be performed by introducing the shredded battery material into a furnace capable of raising the shredded battery material to a high temperature and raising the shredded battery material to a temperature equal to or higher than a melting point. The shredded battery material may include, for example, valuable metals such as Ni, Co, Mn, and Li. The high-temperature heat treatment may involve heat treatment conditions under which a high-temperature reduction reaction is performed without undergoing a melting step of the battery.

In one embodiment, the step of high-temperature heat-treating the shredded battery material may be performed in a gas atmosphere of at least one of an inert gas, carbon dioxide, carbon monoxide, hydrocarbon gas, and oxygen. In the case of the inert gas, the inert gas may include, for example, at least one of argon and nitrogen. By performing a reduction reaction of the shredded material in the gas atmosphere, there is an advantage in that a recovery rate of valuable metal elements contained in the shredded battery material can be increased.

In one embodiment, the step of high-temperature heat-treating the Ni-, Co-, Mn-, and Li-containing shredded battery material may be performed in a gas atmosphere including at least one of an inert gas, carbon dioxide, carbon monoxide, and hydrocarbon gas; and oxygen. In one embodiment, the step may be performed in a gas atmosphere having an oxygen concentration of 0.1 vol% to 2.0 vol%. Specifically, the oxygen concentration may be in a range of 0.4 vol% to 1.2 vol%.

When the oxygen concentration is outside the upper limit of the above-described range, as the oxygen concentration increases, the reaction Li₂O + C + O₂(g) = Li₂CO₃ is promoted, but at the same time, LiAlO₂ and Li₅AlO₄ decrease. Specifically, when the oxygen concentration is outside the upper limit of the above-described range, carbon dioxide is excessively formed during the reduction reaction process, and lithium is gasified together therewith and lost, or Li₂CO₃(s) is excessively generated, thereby making recovery by acid leaching difficult. When the oxygen concentration is outside the lower limit of the above-described range, there is a problem in that the lithium recovery rate decreases.

In one embodiment, the step of high-temperature heat-treating the shredded battery material may be performed at 600°C to 1,500°C. Specifically, the high-temperature heat-treating step may be performed at 900°C to 1,500°C, more specifically 1,100°C to 1,500°C, and still more specifically 1,300°C to 1,500°C. In the step of high-temperature heat-treating the shredded battery material, as the temperature increases, Li₅AlO₄ is generated due to the reaction LiAlO₂(s)+2Li₂CO₃(s)=Li₅AlO₄+2CO₂(g), but a vaporization reaction of LiF(g) is promoted, and when the step is performed within the above-described range, the yield of lithium can be improved.

When the temperature is outside the upper limit of the above range, there is a problem of lithium loss due to lithium vaporization. Specifically, when the temperature is outside the upper limit of the above range, the vaporization reaction of LiF(g) is excessively promoted, and thus the lithium recovery rate decreases due to loss of lithium.

When the temperature is outside the lower limit of the above range, sintering and reduction of alloy elements are not smoothly performed, a stabilized lithium-containing compound cannot be formed, and thus it is difficult to recover a stabilized compound when a lithium compound is recovered later. Specifically, when the temperature is outside the lower limit of the above range, MnO among Li-containing Ni, Co, and Mn oxides in the positive electrode material is not dissociated, MnAl₂O₄ is generated due to the reaction MnO(s)+2Al(s)+3/2O₂=MnAl₂O₄(s), and the lithium concentration in the lithium compound is reduced, thereby causing a problem in that the lithium recovery rate decreases.

The step of magnetically separating the high-temperature heat-treated product may magnetically separate the product to separate a first magnetic material having magnetism and a first non-magnetic material having non-magnetism. Magnetic separation may separate particles through contact with a magnetic material using the magnetic material, and various types of magnetic separation methods may be applied.

The first magnetic material may be a composition including Ni, Co, and Mn, which are valuable metals, and specifically, may be a composition including a core portion and a shell portion disposed on the core portion. The core portion may include a valuable metal recovery alloy. The core portion of the composition for recovering valuable metals may be recovered from a positive electrode material component in the waste battery.

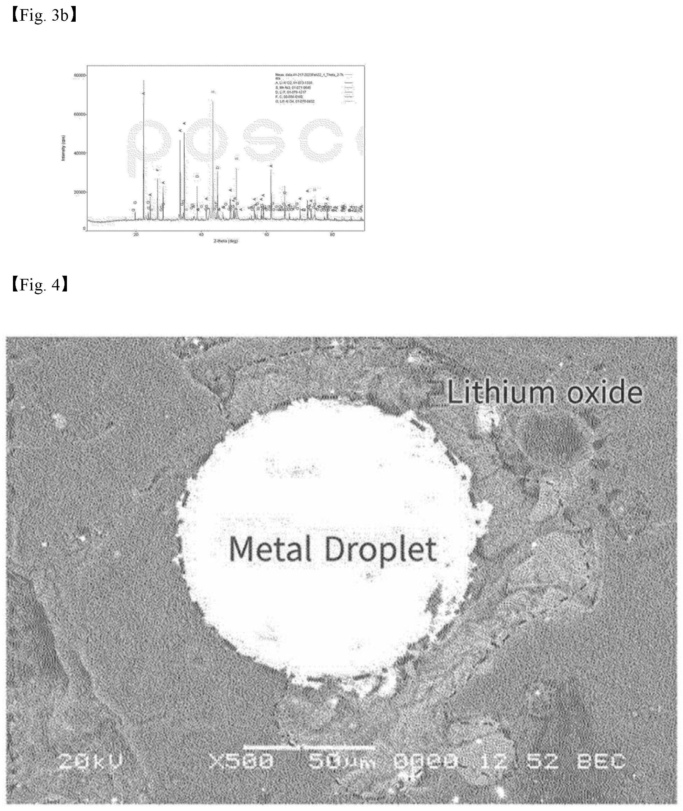

The shell portion is disposed on the core portion and may include a lithium compound. Specifically, when valuable metals are recovered from a waste battery, the valuable metals in the waste battery exist in an oxide form, and reduction occurs by graphite in a negative electrode material through a high-temperature heat treatment process. At this time, a copper current collector may melt and exist in a liquid state, and may serve to aggregate the reduced valuable metals. The copper current collector and the aluminum current collector may undergo a partial reduction reaction with a positive electrode material oxide, and the remainder may react with lithium, so that a compound in the form of an oxide containing lithium may remain. A detailed description thereof will be provided below with reference to FIGS. 3A, 3B, and 4.

A second non-magnetic material may include at least one of a compound including Li not bound to valuable metals in the magnetic separation step and a graphite material including carbon.

In one embodiment, the magnetic separation step may be performed in a magnetic force intensity range of 1,000 Gauss to 5,000 Gauss. Specifically, the magnetic separation step may be performed in a magnetic force range of 2,000 Gauss to 3,000 Gauss.

As the magnetic separation step is performed within the magnetic force intensity range, there is an advantage in that valuable metals can be efficiently separated. When the magnetic force intensity range is outside the upper limit of the above-described range, even a trace amount of valuable metals is recovered, thereby increasing the recovery rate, but a grade of the recovered valuable metals decreases and an amount of impurities such as graphite and copper mixed therein increases, and thus process efficiency is lowered and treatment costs increase in a subsequent wet refining process. When the magnetic force intensity range is outside the lower limit of the above-described range, the recovery rate of valuable metals decreases, thereby increasing loss of Ni, Co, and Mn.

The step of pulverizing the product having magnetism among the magnetically separated products to separate a magnetic material and a non-magnetic material may be a step of pulverizing the first magnetic material that has been magnetically sorted. The first magnetic material, as described above, refers to a core portion including a valuable metal alloy and a compound including lithium disposed on the core portion. The first magnetic material may undergo a pulverization process so that the core portion and the shell portion are separated. Specifically, the first magnetic material may be separated into a second magnetic material and a second non-magnetic material through the above-described pulverization process. The second magnetic material may mean, for example, an NCM alloy including Ni, Co, and Mn, and the second non-magnetic material may be a compound including lithium, for example, lithium aluminate (LiAlO₂).

In one embodiment, the first magnetic material may be separated into the valuable metal recovery alloy and the compound including lithium by mechanical or physical external force. As described above, not only can the valuable metal recovery alloy be recovered from the valuable metal recovery composition, but also the lithium compound can be separated at the same time, thereby increasing the recovery rate of lithium and reducing the amount of lithium lost.

In one embodiment, the pulverization step uses equipment for pulverization using shear force in the form of a vertical attrition mill, and an RPM of an agitator for the vertical attrition mill may be performed in a shear force range of 1 m/sec to 5 m/sec based on tip speed. Specifically, the pulverization step may be performed in a shear force range of 2 m/sec to 3 m/sec based on tip speed. As the pulverization step is performed in the above-described shear force range, the NCM alloy, which is the core portion of the first magnetic material, is not pulverized, and only the compound including lithium, which is the shell portion disposed on the core portion, can be pulverized into fine powder.

At this time, the tip speed may be calculated by the following equation: Tip Speed = Pi × impeller diameter × RPM / 100.

In one embodiment, when the shear force is outside the upper limit of the above-described range, after the shell portion of the first magnetic material is separated, even the magnetic core portion inside is pulverized, and because the core portion is a ductile metal, it is rolled and spherical particles become larger into a plate-like shape and are then pulverized again into particles having a small size. At this time, in a process of separating the magnetic material of the core portion and the lithium compound of the shell portion using particle size, there is a problem of reduced recovery rate. When the shear force is outside the lower limit of the above-described range, there is a problem in that the lithium compound of the shell portion is not pulverized and is recovered again together with the magnetic material of the core portion.

In one embodiment, the pulverizing step may be performed for 20 minutes to 80 minutes. Specifically, the pulverizing step may be performed for 30 minutes to 60 minutes. As the pulverizing step is performed within the above-described range, recovery rates of valuable metals such as Ni, Co, Mn, and Li can be increased.

When the pulverizing step is outside the upper limit of the above-described range, the magnetic material including the magnetic material of the core portion and the lithium compound of the shell portion is excessively pulverized and rolled into a plate-like shape due to ductility, and is continuously over-pulverized so that plate-like particles are split again into fine particles, and thus there is a problem in that magnetic force is insufficiently effective in further magnetic sorting. When the pulverizing step is outside the lower limit of the above-described range, there is a problem in that the shell portion including the lithium compound is not easily separated from the magnetic material having a core-shell structure.

In one embodiment, after the pulverization step, the method may include an additional separating step by any one of particle size separation, flotation, and magnetic separation. The flotation is a method for separating particles in consideration of a difference in specific gravity for each material, and for example, may separate particles based on a large or small specific gravity of particles corresponding to a specific solvent using the specific solvent.

When the core portion and the shell portion are separated from the first magnetic material through the pulverization step, the valuable metal alloy may be separated in a state having a large particle size because the particles are elongated due to ductile properties of the metal, and the compound including lithium may be pulverized into a fine powder form having a small particle size. Specifically, the first magnetic material may be separated into a compound including lithium smaller than a particle size of 70 µm to 80 µm and a valuable metal alloy having a particle size of 70 µm to 80 µm or more.

In one embodiment, the core portion and the shell portion separated through the pulverization step may be subjected to particle size separation based on a particle size of 70 µm to 80 µm. The compound including lithium, which is the shell portion, has a particle size smaller than the above-described particle size standard, and the valuable metal alloy, which is the core portion, has a particle size larger than the above-described particle size, and thus the valuable metal alloy and the compound including lithium can be easily separated through particle size separation.

In another embodiment, the core portion and the shell portion separated through the pulverization step may be subjected to magnetic sorting. Through the magnetic sorting, a valuable metal alloy including Co having magnetism and a compound including lithium having no magnetism can be easily separated.

In still another embodiment, the core portion and the shell portion separated through the pulverization step may be subjected to flotation. Through the flotation, the core portion including valuable metals, which precipitates, and the compound including lithium, which floats, can be easily separated.

In one embodiment, the method may include flotating the first non-magnetic material. The first non-magnetic material having non-magnetism separated in the first magnetic sorting step may be separated as including graphite.

In one embodiment, the flotation step may be a step of sorting a floating material including graphite and a precipitate including valuable metals. Specifically, the flotation step may be a step of floating hydrophobic graphite in the first non-magnetic material and precipitating and separating a compound including lithium and a fine valuable metal alloy.

In one embodiment, the precipitate may be magnetically separated to recover a material including valuable metals, and the recovered material may be pulverized together with the product having magnetism. A detailed description of the pulverizing step is the same as described above.

In one embodiment, after the step of pulverizing the product having magnetism among the magnetically separated products to separate a magnetic material and a non-magnetic material, the method may include drying a final product. Through the drying step, the valuable metal alloy, the compound including lithium, and graphite may be dried in powder form.

In one embodiment, the step of drying the final product may be performed at 80°C to 200°C. Specifically, the step of drying the final product may be performed at 100°C to 150°C.

When drying is performed outside the upper limit of the above temperature range, there is a problem in that a flammable material such as graphite is combusted. When drying is performed outside the lower limit of the above temperature range, moisture of particles in a powder state, which is the final product, is not completely dried, and a product having high moisture content is discharged, which causes a problem in that an amount of acid used increases in a leaching process of a downstream wet refining process.

FIGS. 3A and 3B show XRD analysis results of a composition for recovering valuable metals formed after heat treatment according to one embodiment of the present invention.

Referring to FIGS. 3A and 3B, it can be confirmed that, in the valuable metal recovery composition subjected to reduction heat treatment at a high temperature, Ni, Co, Mn, and the like are not reduced to form an alloy, but are bound to an Al component in the battery to form a compound including lithium, for example, lithium oxide. It can be confirmed that the lithium oxide is formed as, for example, LiAlO₂, Li₅AlO₄, and Li₂CO₃. In one embodiment, the valuable metal recovery composition may further include LiF. The LiF may be a result according to a residual amount of electrolyte depending on a degree of pretreatment.

In one embodiment, LiAlO₂ may include, as XRD peaks, at least one of 20.5° to 21.5°, 29.0° to 29.5°, 31.5° to 32.0°, 32.2° to 33.0°, 60.5° to 61.5°, and 70.0° to 72.0°. Li₅AlO₄ may include, as XRD peaks, at least one of 19.5° to 20.2° and 21.6° to 22.2°.

A LiAl₅O₈ composition may include, as XRD peaks, at least one of 15.0° to 17.4°, 24.2° to 26.1°, 31.4° to 33.1°, 36.2° to 40.3°, 46.1° to 47.3°, 61.1° to 63.4°, and 66.2° to 68.7°. A LiF composition may include, as XRD peaks, at least one of 37.5° to 40.2°, 43.9° to 46.5°, and 64.5° to 66.5°.

A Li₃PO₄ composition may include, as XRD peaks, at least one of 29.2° to 40.1° and 52° to 77.1°. A Li₂SiO₃ composition may include, as XRD peaks, at least one of 17.7° to 20.1°, 26.1° to 29.5°, 32.2° to 36.2°, and 37.6° to 39.7°. A Li₄SiO₄ composition may include, as XRD peaks, at least one of 16.2° to 18.3°, 21.4° to 25.2°, 34.2° to 39.7°, and 59.2° to 63.4°.

A Li₂Si₂O₅ composition may include, as XRD peaks, at least one of 16.2° to 18.3°, 21.4° to 25.2°, 34.2° to 39.7°, and 59.2° to 63.4°. A Li₂CO₃ composition may include, as XRD peaks, at least one of 24.0° to 26.0°, 27.0° to 29.0°, 34.0° to 36.0°, and 37.0° to 39.0°.

FIG. 4 is an SEM photograph of the composition for recovering valuable metals according to one embodiment of the present invention.

Referring to FIG. 4, the composition for recovering valuable metals according to one embodiment of the present invention includes a core portion and a shell portion disposed on the core portion. The core portion may include a valuable metal recovery alloy. The valuable metals of the present invention may mean expensive metal components included in a battery and may mean nickel, cobalt, manganese, aluminum, copper, and lithium. The core portion of the composition for recovering valuable metals may be recovered from a positive electrode material component in the waste battery.

The shell portion is disposed on the core portion and may include a lithium compound. Specifically, when valuable metals are recovered from a waste battery, the valuable metals in the waste battery exist in an oxide form, and reduction occurs by graphite in a negative electrode material through a high-temperature heat treatment process. At this time, a copper current collector may melt and exist in a liquid state, and may serve to aggregate the reduced valuable metals. The copper current collector and the aluminum current collector may undergo a partial reduction reaction with a positive electrode material oxide, and the remainder may react with lithium, so that a compound in the form of an oxide containing lithium may remain.

In one embodiment, a content of lithium (Li) in the lithium compound may be 4 wt% to 35 wt%, and specifically 4 wt% to 25 wt%, based on 100 wt% of the entire lithium compound. As the content of Li in the lithium compound satisfies the above-described range, it is possible to satisfy a composition including a lithium-containing compound having a high lithium content and an excellent lithium recovery rate. When the content of Li is outside the upper limit of the above-described range, the Li₂O content increases, thereby generating a large amount of a compound that is difficult to recover due to water solubility problems, and reducing the lithium recovery rate. When the content of Li is outside the lower limit of the above-described range, the lithium recovery rate is low, and thus there is a problem of no utility value.

In one embodiment, the lithium compound may include at least one of LiAlO₂, Li₅AlO₄, LiAl₅O₈, Li₂CO₃, LiF, Li₃PO₄, Li₂SiO₃, Li₄SiO₄, and Li₂Si₂O₅. In one embodiment, the lithium compound may include lithium aluminum oxide.

The lithium compound may be, for example, lithium oxide. The lithium-aluminum oxide may be implemented in an oxide form by physical or chemical bonding of lithium included in the composition.

In one embodiment, the lithium compound may include lithium aluminum oxide. Specifically, the content of the lithium aluminum oxide may include 45.0 wt% to 97.0 wt% based on 100 wt% of the valuable metal recovery composition. Specifically, the content may be 70 wt% to 90 wt%.

When the content of the lithium aluminum oxide is outside the upper limit of the above-described range, lithium hydroxide, lithium carbonate, lithium fluoride, and the like having high water solubility are dissolved in large amounts in water during a sorting process. When the content of the lithium aluminum oxide is outside the lower limit of the above-described range, most of the lithium compound is recovered in the form of LiAlO₂ having low water solubility, and it means that lithium compounds having high water solubility were dissolved in water during the sorting process, which causes a problem in that lithium must be recovered again from the water used in the sorting process.

In one embodiment, the lithium compound may include lithium- and silicon-containing oxide. Specifically, the content of the lithium- and silicon-containing oxide may include 2 wt% to 30 wt%, based on 100 wt% of the valuable metal recovery composition. Specifically, the content may include 10 wt% to 25 wt%. As the lithium- and silicon-containing oxide satisfies the above-described range, there is an advantage in that a stable product can be secured under a high temperature and appropriate oxygen concentration atmosphere, and an actual yield of lithium can be increased during acid leaching.

When the content of the lithium- and silicon-containing oxide is outside the upper limit of the above-described range, it means that the lithium- and silicon-containing oxide was exposed for a long time at the maximum temperature during a high-temperature reduction reaction, and thus there is a problem in that productivity of a reactor decreases and energy costs increase. When the content of the lithium- and silicon-containing oxide is outside the lower limit of the above-described range, thermal energy sufficient for lithium to react with aluminum, silicon, or the like to generate a lithium compound such as lithium aluminate was insufficient, or the temperature of the reactor was too high and lithium was volatilized and removed, and thus there is a problem in that a recovery rate for recovering lithium decreases.

In one embodiment, the valuable metal recovery composition may include silicon (Si) in an amount of 10 wt% or less based on 100 wt% of the valuable metal recovery composition. Specifically, the silicon may be 1.0 wt% or less, and more specifically 0.5 wt% or less.

When the content of silicon (Si) is outside the upper limit of the above-described range, there is a problem in that process time and costs increase in removing silicon to a battery grade in a downstream wet refining process. When the content of silicon (Si) is outside the lower limit of the above-described range, the remaining weight% among the silicon of the input raw material is dispersed into graphite and lithium compounds, and thus process time and costs increase in processes of refining and smelting graphite and lithium compounds.

In one embodiment, Li₂CO₃ may be included in an amount of 30% or less based on 100 wt% of the entire composition. The Li₂CO₃ may be included in an amount of 15.0% or less, and more specifically 5% or less. As the content of Li₂CO₃ satisfies the above-described range, there is an advantage of preventing generation of a large amount of a compound that is difficult to recover due to water solubility problems.

In one embodiment, LiF may be included in an amount of 30 wt% or less based on 100 wt% of the entire composition. The LiF may be included in an amount of 6.5 wt% to 24.0 wt%, and more specifically 6.5 wt% to 15 wt% or less, based on 100 wt% of the entire composition. As the content of LiF satisfies the above-described range, there is an advantage of preventing generation of a large amount of a compound that is difficult to recover due to water solubility problems.

When the LiF is outside the upper limit of the above-described range, sulfuric acid ions and fluorine ions are mixed during sulfuric acid leaching, which makes pH adjustment difficult and reduces Li recovery rate. When the LiF is outside the lower limit of the above-described range, Li₂SiO₃, Li₄SiO₄, Li₂Si₂O₅, and the like increase, making sulfuric acid leaching difficult and delaying leaching process time.

In one embodiment, a total content of Li₂CO₃ and LiF may be 50% or less based on 100 wt% of the entire composition. Specifically, the total content may be 0.5% to 50%, and more specifically 0.5% to 30% or less.

When the total content is outside the upper limit of the above-described range, a large amount of compounds that are difficult to recover due to water solubility problems is generated, and thus Li recovery is not easy. When the total content is outside the lower limit of the above-described range, Li₂SiO₃, Li₄SiO₄, Li₂Si₂O₅, and the like among the compounds increase, sulfuric acid leaching is not easy, and leaching process time is delayed.

As the total amount of Li₂CO₃ and LiF satisfies the above-described range, generation of a large amount of compounds that are difficult to recover due to water solubility problems can be prevented, and high temperature and oxygen concentration are appropriately adjusted to generate a large amount of stable compounds having excellent leaching rate in sulfuric acid, thereby increasing efficiency of lithium recovery.

In one embodiment, Li₃PO₄ may be included in an amount of 10 wt% or less based on 100 wt% of the entire composition. The Li₃PO₄ may be included in an amount of 5 wt%, specifically 3 wt% or less, and more specifically 0.1 wt% to 0.7 wt%, based on 100 wt% of the entire composition. As the content of Li₃PO₄ satisfies the above-described range, it is possible to prevent a reduction in Li recovery rate due to problems such as leaching behavior according to pH change by PO₃⁻ anions and generation of LiOH during impurity removal during acid leaching. As the content of Li₃PO₄ satisfies the above-described range, it is possible to prevent a reduction in Li recovery rate due to problems such as leaching behavior according to pH change by PO₃⁻ anions and generation of LiOH during impurity removal during acid leaching.

Hereinafter, preferred Examples and Comparative Examples of the present invention will be described. However, the following Examples are merely preferred embodiments of the present invention, and the present invention is not limited to the following Examples.

### <Experimental Example 1>

### 1. Step of Preparing Valuable Metal Recovery Composition

A cell, module, or pack, which is an electric vehicle waste battery including a positive electrode material including lithium ions, a graphite negative electrode material, an aluminum current collector, a separator, an electrolyte solution, and a copper current collector, was prepared. The waste battery was frozen at -30°C or lower and then shredded, or was discharged under brine discharge or electrical discharge conditions, and then the waste battery was shredded using shredder equipment under atmospheric conditions or inert gas conditions such that the longest length among the width and length became 100 mm or less.

After obtaining a composition for recovering valuable metals by the above-described method, the shredded battery material was heat-treated at 1,300°C under an oxygen partial pressure condition of 0.5% to perform a reduction process. After the reduction process, as described above, a composition for recovering valuable metals composed of a core portion including valuable metals and a shell portion including a compound containing lithium on the core portion was generated.

Table 1 below shows components and contents of the composition for recovering valuable metals generated by the above-described method.

The components and contents in Table 1 below were measured by a quantitative analysis method using (ICP-OES) equipment, C/S analysis equipment, and the like.

**[Table 1]**

| | Li(wt%) | Ni(wt%) | Co(wt%) | Mn(wt%) | Al(wt%) | Cu(wt%) | C(wt%) | Rem arks |
|---|---|---|---|---|---|---|---|---|
| Exp erim enta l Exa mpl e 1 | 3.91 | 19.85 | 6.13 | 6.56 | 7.20 | 11.43 | 33.70 | Exa mpl e |

### 2. Primary Magnetic Sorting Step

The composition for recovering valuable metals subjected to the high-temperature reduction process was separated into a magnetic material and a non-magnetic material using a magnetic sorter having a magnetic force intensity of 3000 Gauss.

Experimental Example 2_1 in Table 2 below shows components and contents of the magnetic material and the non-magnetic material separated while passing through the 3000 Gauss magnetic sorter.

**[Table 2]**

| | Mag netic or Non - Mag netic | 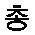 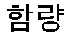 (wt%) | Li(wt%) | Ni(wt%) | Co(wt%) | Mn(wt%) | Al(wt%) | Cu(wt%) | C(wt%) | Re mar ks |
|---|---|---|---|---|---|---|---|---|---|---|
| Exper iment al Exam ple 2_1 | Mag netic | 64.00 | 4.96 | 30.26 | 9.35 | 9.75 | 7.62 | 12.36 | 10.30 | Exa mpl e |
| Exper iment al Exam ple 2_2 | Non - mag netic | 36.00 | 2.04 | 1.34 | 0.40 | 0.89 | 6.44 | 9.77 | 75.30 | Exa mpl e |

Referring to Table 2, it was confirmed that, in the case of the magnetic material separated through magnetic sorting as in Experimental Example 2_1, the magnetic material included NCM metals, which are valuable metals, and had high contents such as Li, Ni, Co, and Mn. In the case of particles separated as the non-magnetic material through magnetic sorting as in Experimental Example 2_2, it was confirmed that most of Li, Al, and graphite particles were separated, and thus the content of C was high.

### 3_1. Flotation Step

The non-magnetic material separated through magnetic sorting as in Experimental Example 2_2 was subjected to flotation using Denver Sub_A flotation equipment of Experimental Example 3_1 under conditions of a pulp concentration of 30%, an impeller rotation speed of 500 rpm, kerosene 0.1 ml/100 g, and MIBC 0.1 ml/100 g.

Through the flotation, lightweight graphite powder floated to an upper portion of the equipment and was separated to recover graphite.

Table 3 below shows components and contents of products obtained through the flotation process.

**[Table 3]**

| | Precipitat ion or Floating | Total Content (wt%) | Li(wt%) | Ni(wt%) | Co(wt%) | Mn(wt%) | Al(wt%) | Cu(wt%) | C(wt%) | Re mar ks |
|---|---|---|---|---|---|---|---|---|---|---|
| | | (wt%) | | | | | | | | |
| Exper iment alExam ple3_ 1 | Floating (O/F) | 81.11 | 0.44 | 0.33 | 0.17 | 0.12 | 0.48 | 1.25 | 91.32 | Exa mpl e |
| Exper iment al Exam ple3_ 2 | Precipitat e (U/F) | 18.89 | 1.06 | 1.04 | 0.37 | 1.09 | 10.01 | 18.04 | 5.75 | Exa mpl e |

Referring to Table 3, it can be seen that the C content of the material floated as Over Flow (O/F) was 92.5%, which significantly increased compared with the C content of 35.07% of the initial shredded battery material and the C content of 75.30% of the raw material separated as the non-magnetic material through magnetic sorting and introduced into the flotation separator. In addition, it can be seen that the C content of the precipitate remaining as Under Flow (U/F) was 5.75%, and most of hydrophobic C was recovered as a floating material. In addition, when examining the lithium content ratio of the floating material and the precipitate, it can be seen that most lithium did not float but remained in the precipitate, and C and lithium could be efficiently separated through flotation. In addition, judging from the high aluminum content of the precipitate, lithium is considered to remain mostly in the precipitate in the form of LiAlO₂. In addition, Cu did not float and mostly remained as a precipitate, and the content was 18.04%.

### 4. Pulverization Step and Secondary Magnetic Sorting Step

The magnetic material subjected to the 2_1. magnetic separation step was subjected to a pulverization step using an attrition mill, which is a vertical stirring mill, under conditions of 500 rpm, an impeller tip speed of 2.8 m/sec, a pulverization time of 60 minutes, and a solid content of 30 wt%. As described above, the magnetic material was confirmed to be a composition for recovering valuable metals composed of a core portion including valuable metals and a shell portion including a compound containing lithium disposed on the core portion, and the core portion and the shell portion were separated while the composition underwent the pulverization process.

Table 5 below shows components and contents of products obtained by separating the magnetic material including the core portion and the shell portion and separating the products according to particle size.

**[Table 4]**

| | Mag netis m | Total Content (wt%) | Li(wt%) | Ni(wt%) | Co(wt%) | Mn(wt%) | Al(wt%) | Cu(wt%) | Re mar ks |
|---|---|---|---|---|---|---|---|---|---|
| Experi mental Examp le 4_1 | Mag netic | 67.97 | 0.37 | 42.19 | 12.94 | 13.51 | 2.15 | 3.79 | Exa mpl e |
| Experi mental Examp le 4_2 | Non-mag netic | 32.03 | 14.56 | 1.15 | 1.40 | 1.21 | 17.96 | 27.45 | Exa mpl e |

Referring to Table 5, in order to separate the product subjected to the pulverization process into an alloy core portion containing valuable metals and a lithium compound, magnetic material and non-magnetic material were separated using a magnetic sorter of 3000 Gauss. As a result, it was confirmed that Experimental Example 4_1, which is the core portion including valuable metals, contained excessive amounts of Ni, Co, and Mn. Experimental Example 4_2 separated as the non-magnetic material was a product obtained by pulverizing the shell portion including lithium, and it was confirmed that the content of lithium was high. The product recovered as a magnetic product in magnetic sorting is such that the shell portion in the form of an oxide is pulverized in the pulverization process, and the ductile core portion is continuously pulverized inside the pulverizer and rolled into a plate-like shape, thereby increasing particle size rather than the initial particle size and reducing thickness. In contrast, since the shell portion has strong brittleness in an oxide form, as the pulverization time increases, pulverization continues and the particle size decreases.

### 5. Secondary Separation Step

Experimental Example 4_1 subjected to the pulverization step may be separated by particle size separation using a difference in pulverization characteristics between the alloy, which is the core portion, and the oxidized compound, which is the shell portion, but it is more preferable to perform secondary sorting through a magnetic sorting process at a magnetic force intensity of 3000 Gauss using the property that the alloy of the core portion has magnetism. At this time, when separation is performed using magnetic sorting, a recovery rate of valuable metals in the core portion can be further increased compared with particle size separation. When particle size separation is applied, separation should be performed using a mesh having a mesh size of 75 µm or 45 µm, and at this time, coarse particles are recovered as an NCM alloy portion and fine particles are recovered as Li oxide.

### 6. Drying Step

The magnetic material including Ni, Co, and Mn, the non-magnetic material including Li, and graphite separated through the above-described steps were reduced in moisture content to 30% using a drum-type dehydrator, a centrifugal dehydrator, or the like, dried to a moisture content of 5% or less through a drying step using hot air at 100°C to 200°C, and then recovered.

Table 5 below shows components and contents of final products recovered through the above-described steps.

**[Table 5]**

| Main Compo nent | Total Content (wt%) | Li(wt%) | Ni(wt%) | Co(wt%) | Mn(wt%) | Al(wt%) | Cu(wt%) | C(wt%) | Remarks |
|---|---|---|---|---|---|---|---|---|---|
| Valuabl e Metal Alloy | 48.35 | 0.37 | 42.19 | 12.94 | 13.51 | 2.15 | 3.79 | 7.16 | Experimental Example 4_1 |
| Lithium Compo und | 24.95 | 9.55 | 1.11 | 1.02 | 1.17 | 15.04 | 23.96 | 12.70 | Experimental Example 4_2 and Experimental Example 3_2 |
| Graphit e | 26.69 | 0.44 | 0.33 | 0.17 | 0.12 | 0.48 | 1.25 | 91.32 | Experimental Example 3_1 |

Referring to Table 5, the valuable metal alloy mainly containing Ni, Co, and Mn can be recovered from the magnetic material separated through the magnetic sorting, pulverization step, and magnetic sorting step as in Experimental Example 4_1. The lithium compound mainly containing lithium can be recovered from the total amount of the non-magnetic material separated through the magnetic sorting, pulverization step, and magnetic sorting step as in Experimental Example 4_2 and the material precipitated through flotation as in Experimental Example 3_2. Graphite can be recovered by separating a material floating through flotation as in Experimental Example 3_1. As described above, through the above-described battery treatment method, it was confirmed that a valuable metal alloy containing valuable metals such as Ni, Co, and Mn could be recovered, and at the same time, a lithium compound having a high lithium content could be separated, thereby increasing recovery rates of valuable metals Li, Ni, Co, and Mn. In addition, it was confirmed that graphite could be separately separated to increase a recovery rate of graphite usable as a negative electrode material.

### <Experimental Example 2>: Change in Components of Magnetic Material and Non-Magnetic Material According to Change in Magnetic Force Intensity

Table 6 below shows changes in components of a magnetic material and a non-magnetic material according to a change in magnetic force intensity during primary magnetic sorting.

**[Table 6]**

| Magn etic Force Intens ity [G] | Class ificat ion | Weight [wt%] | Li | | Ni | | Co | | Mn | | Al | | Cu | |
|---|---|---|---|---|---|---|---|---|---|---|---|---|---|---|
| | | | [WT%] | DIST ,% | [WT%] | DIST ,% | [WT%] | DIST ,% | [WT%] | DIST ,% | [WT%] | DIST ,% | [WT%] | DIST ,% |
| 500 | Mag netic mate rial | 7.23 | 2.66 | 35.93 | 46.40 | 29.85 | 16.00 | 36.61 | 13.30 | 38.17 | 5.65 | 44.93 | 4.90 | 6.98 |
| | Non-mag netic mate rial | 92.77 | 1.50 | 64.07 | 8.50 | 70.15 | 2.16 | 63.39 | 1.68 | 61.83 | 0.54 | 55.07 | 5.09 | 93.02 |
| 1000 | Mag netic mate rial | 32.53 | 2.92 | 60.30 | 38.40 | 87.85 | 13.30 | 91.18 | 11.10 | 86.16 | 6.46 | 33.26 | 8.38 | 46.49 |
| | Non-mag netic material | 67.47 | 2.51 | 39.70 | 2.56 | 12.15 | 0.62 | 8.82 | 0.86 | 13.84 | 6.25 | 66.74 | 4.65 | 53.51 |
| 2000 | Mag netic mate rial | 36.11 | 3.09 | 59.66 | 36.80 | 96.12 | 12.40 | 97.63 | 10.70 | 94.09 | 7.24 | 75.33 | 5.94 | 47.04 |
| | Non-mag netic mate rial | 63.89 | 1.15 | 40.34 | 0.84 | 3.88 | 0.17 | 2.37 | 0.38 | 5.91 | 1.34 | 24.67 | 3.78 | 52.96 |
| 3000 | Mag netic mate rial | 36.19 | 3.26 | 42.98 | 33.40 | 92.48 | 11.20 | 95.6. | 9.54 | 91.54 | 7.20 | 84.66 | 6.01 | 48.98 |
| | Non-mag netic mate rial | 63.81 | 1.25 | 57.02 | 1.54 | 7.52 | 0.29 | 4.37 | 0.50 | 8.46 | 0.74 | 15.34 | 3.55 | 51.02 |
| 5000 | Mag netic mate rial | 35.61 | 3.08 | | 33.50 | 91.82 | 11.30 | 94.27 | 9.55 | 89.95 | 6.77 | 39.77 | 5.04 | 37.28 |
| | Non-mag netic mate rial | 64.39 | 2.26 | | 1.65 | 8.18 | 0.38 | 5.73 | 0.59 | 10.05 | 5.67 | 60.23 | 4.69 | 62.72 |

Referring to Table 6, when examining changes in components of a magnetic material and a non-magnetic material according to a change in magnetic force intensity during primary magnetic sorting, at weak magnetic force intensities of 500 and 1000 Gauss (G), the grade of the NCM positive electrode material recovered as a magnetic product was high, but the recovery rate (Dist.) was low at 90% or less, and the Li content and recovery rate were reduced. However, it can be confirmed that, at 2000 Gauss or more, most of the NCM positive electrode material was recovered as the magnetic material.

### <Experimental Example 3>: Secondary Magnetic Sorting After Controlling Pulverization Conditions

Table 7 below shows results of separating a pulverized product into a magnetic material and a non-magnetic material again using a 3000 Gauss magnetic sorter after the magnetic material was pulverized after primary magnetic sorting.

At this time, a vertical stirring ball mill (attrition mill) was used as a pulverizer, and pulverization conditions were RPM 500 (tip speed 2.65 m/sec), a pulverization vessel size of 1 L, a solid concentration of 30%, and pulverization time of 0 minutes to 90 minutes, and the magnetic material and the non-magnetic material were analyzed for each pulverization time.

**[Table 7]**

| Pulv eriza tion Tim e [min ] | Class ificat ion | Weight [wt%] | Li | | Ni | | Co | | Mn | | Al | | Cu | |
|---|---|---|---|---|---|---|---|---|---|---|---|---|---|---|
| | | | [WT%] | DIST ,% | [WT%] | DIST ,% | [WT%] | DIST ,% | [WT%] | DIST ,% | [WT%] | DIST ,% | [WT%] | DIST ,% |
| 10 | Mag netic mate rial | 68.12 | 2.41 | 46.31 | 53.90 | 86.03 | 18.40 | 87.18 | 15.30 | 85.82 | 0.70 | 9.35 | 6.56 | 86.54 |
| | Non-mag netic mate rial | 31.88 | 5.97 | 53.69 | 18.70 | 13.97 | 5.78 | 12.82 | 5.40 | 14.18 | 14.50 | 90.65 | 2.18 | 13.46 |
| 30 | Mag netic mate rial | 55.93 | 1.53 | 21.98 | 51.30 | 92.54 | 16.40 | 95.15 | 14.70 | 88.39 | 4.68 | 35.27 | 8.07 | 82.58 |
| | Non-mag netic mate rial | 44.07 | 6.89 | 78.02 | 5.25 | 7.46 | 1.06 | 4.85 | 2.45 | 11.61 | 10.90 | 64.73 | 2.16 | 17.42 |
| 60 | Mag netic mate rial | 82.87 | 0.85 | 19.79 | 41.00 | 92.32 | 13.80 | 93.06 | 11.70 | 91.59 | 2.39 | 25.54 | 4.86 | 72.54 |
| | Non-mag netic mate rial | 17.13 | 16.67 | 80.21 | 16.50 | 7.68 | 4.98 | 6.94 | 5.20 | 8.41 | 33.70 | 74.46 | 8.90 | 27.46 |
| 90 | Mag netic mate rial | 59.81 | 0.56 | 8.69 | 43.40 | 85.56 | 13.30 | 83.09 | 13.80 | 79.86 | 2.21 | 16.96 | 6.89 | 68.39 |
| | Non-mag netic mate rial | 40.19 | 8.76 | 91.31 | 10.90 | 14.44 | 4.03 | 16.91 | 5.18 | 20.14 | 16.10 | 83.04 | 4.74 | 31.61 |

Referring to Table 7, at an early point of pulverization, 10 minutes, only a portion of the lithium compound of the shell portion coated on the NCM alloy portion was pulverized, and thus the recovery rate of the NCM alloy portion recovered as the magnetic material was only at the level of Ni 86%, Co 87%, and Mn 85%. However, when the pulverization time reached 30 minutes to 60 minutes, it was confirmed that Ni, Co, and Mn were recovered at a recovery rate of 90% or more. In addition, when the pulverization time exceeded 60 minutes and became more than 90 minutes, most of the lithium compound was pulverized and recovered as a non-magnetic material at a high recovery rate of 91%. However, after all of the shell portion was peeled off, the NCM alloy portion, which is the core portion, was rolled into a plate-like shape due to ductility and then continuously over-pulverized, so that the plate-like particles were split again into fine particles. As a result, the particles became excessively fine, and the influence received by a single particle from magnetic force became insignificant. Accordingly, it was confirmed that the micronized NCM alloy portion could not be recovered as a magnetic material during magnetic sorting even though it had magnetism, which resulted in a reduction in the Ni, Co, and Mn recovery rate again to 85% or less.

Although preferred embodiments have been described in detail above, the scope of rights of the present invention is not limited thereto, and various modifications and improvements made by a person having ordinary skill in the art using the basic concept defined in the following claims also fall within the scope of rights of the present invention.

## Claims

1. A recovered material recovered from a waste battery, the recovered material being a material recovered from a waste battery and comprising, based on 100 wt% of the recovered material:
20 wt% to 35 wt% of a valuable metal recovery alloy;
25 wt% to 50 wt% of a lithium compound; and
a balance of a graphite-based material.

2. The recovered material recovered from a waste battery of claim 1,
wherein the valuable metal recovery alloy comprises Ni, Co, Mn, and impurities.

3. The recovered material recovered from a waste battery of claim 2,
wherein the valuable metal recovery alloy comprises, based on 100 wt% of an entire valuable metal recovery alloy, 90 wt% or more of a total amount of Ni, Co, and Mn, and a balance of impurities.

4. The recovered material recovered from a waste battery of claim 3,
wherein the valuable metal recovery alloy comprises copper (Cu): 1 wt% to 7 wt% based on 100 wt% of the entire valuable metal recovery alloy.

5. The recovered material recovered from a waste battery of claim 3,
wherein the valuable metal recovery alloy comprises, based on 100 wt% of the entire valuable metal recovery alloy, nickel (Ni): 50 wt% to 60 wt%, cobalt (Co): 18 wt% to 28 wt%, manganese (Mn): 10 wt% to 20 wt%, and a balance of impurities.

6. The recovered material recovered from a waste battery of claim 1,
wherein the lithium compound comprises, based on 100 wt% of the lithium compound, lithium (Li): 10 wt% to 20 wt%, aluminum (Al): 20 wt% to 30 wt%, and a balance of impurities.

7. The recovered material recovered from a waste battery of claim 1,
wherein the lithium compound comprises lithium oxide.

8. The recovered material recovered from a waste battery of claim 7,
wherein the lithium oxide comprises lithium aluminum oxide.

9. The recovered material recovered from a waste battery of claim 1,
wherein the graphite-based material comprises carbon (C): 80 wt% to 90 wt%, and a balance of impurities.

10. The recovered material recovered from a waste battery of claim 1,
wherein the graphite-based material comprises copper (Cu): 13 wt% to 25 wt%.

11. The recovered material recovered from a waste battery of claim 1,
wherein the valuable metal recovery alloy, the lithium compound, and the graphite-based material are each in a powder form.

12. The recovered material recovered from a waste battery of claim 1,
wherein at least a portion of the lithium compound comprises a composition disposed on at least a portion of a surface of the valuable metal recovery alloy.

13. The recovered material recovered from a waste battery of claim 12,
wherein the composition has a core-shell structure.

14. A method for recovering valuable metals from a product obtained by reduction heat-treating a shredded material recovered from a waste battery at a high temperature, the method comprising:
magnetically separating the heat-treated product into a first magnetic material and a first non-magnetic material; and
pulverizing the first magnetic material,
wherein the pulverizing is performed in a shear force range of 1 m/sec to 5 m/sec based on tip speed.

15. The method for recovering valuable metals of claim 14,
wherein the pulverizing is performed for 30 minutes to 60 minutes.

16. The method for recovering valuable metals of claim 14,
wherein at least a portion of a product obtained by reduction heat-treating the shredded material recovered from the waste battery at a high temperature comprises a valuable metal recovery composition comprising:
a core portion comprising a valuable metal recovery alloy; and
a shell portion disposed on the core portion and comprising a lithium compound.
